# EUROPEAN PATENT APPLICATION

(11) **EP 2 514 729 A1**
(43) Date of publication of application: **24.10.2012**
(21) Application number: 10837145.1
(22) Date of filing: 07.12.2010
(51) Int. Cl.: C04B 18/24

(54) **PROCESS FOR THE MANUFACTURE OF CONSTRUCTION MATERIALS FROM CELLULOSIC RESIDUES**

(30) Priority: 16.12.2009 CO 09144024
(71) Applicant: Garcia Quiroz, Edwin Andrés, Risaralda (CO); De Los Rios Trejos, David, Valle (CO); Universidad Tecnologica De Pereira, Risaralda (CO)
(72) Inventor: QUIROZ,GARCIA, PEREIRA, RISARALDA (CO); ANDRES, EDWIN, PEREIRA, RISARALDA (CO)
(74) Representative: Carvajal y Urquijo, Isabel
(86) International application number: PCT/IB2010/055622
(87) International publication number: WO 2011/073851

(57) **Abstract**

The present invention is related with a process for the production of a great variety of building materials from the paper waste, that consumes a high quantity of this industrial waste, which implies a decrease in the deposit of these polluting wastes and therefore, the decrease of the adverse effects that such wastes cause on the environment.

## Description

### TECHNOLOGICAL FIELD

The present invention is related with a process for the production of a great variety of building materials from paper waste, that consumes a high quantity of this industrial waste, which implies a decrease of the deposits of these polluting wastes and therefore, the decrease of the adverse effects that such wastes cause to the environment.

The process of the invention allows obtaining an apt material for building, from the wastes generated during the process of paper manufacturing, without need of adding binders. The raw material of the process is taken directly from the paper factory without any pretreatment or water addition in any stage of the process.

The material produced through this process presents excellent physical properties of resistance to compression and to moisture absorption, also of not being corrosive, non-reactive, non-explosive, non-toxic and non-flammable, which makes it superior to similar products due to the non-use of neutralizing agents.

The invention contained in the present request, supplies a procedure for obtaining a series of products applicable or useful in the field of building, in particular but not exclusively, such as: blocks, pavers, tiles, posts, partition plates, ceilings, among others, all from paper wastes.

### STATE OF THE TECHNIQUE

For the making of paper from cellulose it is necessary a great consumption of water and energy. The paper manufacturing processes are based on a mixture of recycled paper or virgin cellulose and water which result is a paste from which different types of paper are produced and a lot of types of waste materials. To this paste, chemical products are added and the paper is formed through a variety of sub-processes.

Normally, the water used during the paper manufacturing is sent to a tank where the heaviest components are deposited on the bottom and are extracted as "sludge". The "sludge" obtained at the end of the process in the paper plant passes through a press (usually mechanic), to eliminate the additional water and are added with other *"sludge"* for their final disposition. This *"sludge"* is known in the industry as: paper waste, cellulose waste or "paper sludge", to name a few.

This sludge basically contains great quantities of water, cellulose short fibres useless to make paper, mineral loads, calcium carbonate, clays and other minerals, diverse mixture catalysts or chlorine for the manufacturing of paper in the process. There's no precise composition of these, given that substantial variations exist on the wood and in the other raw materials used, as well as the processing and the other components that are employed to make different types of paper products. Even a considerable variation is presented in the processes used by the paper manufacturers in the elaboration of similar products.

The elimination of this *"sludge"* is a constant problem for the paper factories and for the environment in general. The current practice consists in subjecting the *"paper sludge"* to a mechanical pressing operation as last process of the treatment of this in the paper factory to eliminate the excess moisture. However, the resulting waste still has a great proportion of water in the materials previously mentioned. According to the current procedures, the waste obtained is normally deposited in landfills for indefinite storage.

To date, various problems have been reported associated with this paper *"sludge"* treatment. In first place, is becoming more difficult each time to localize the adequate sanitary landfills, for the existing landfills are filled and the residents frequently oppose to the expansion or creation of new landfills near their homes. Also, the lixiviate materials of the deposited sludge on such landfills are dangerous. This increases the engineering cost of an adequate landfill because an ideal management of this type of lixiviates is required and increases the surrounding community complaints and the concerns for the undesirable effects on the environment. Although the *"paper sludge"* has a variety of applications, not one meets simultaneously with the sustainable development pillars where the environmental conjugates with the economical and social.

Within this context, there exist an important number of applications directed to the use of cellulose wastes for the production of new materials. Among them the applications JP52090585, JP2001011799, C05470292, ES2242535, MX2000PA000929, MX199504829, US5392721 and US5549059A, which are related to processes for the obtaining of materials from paper sludge, which include steps as mixture with cement, ashes, silicates; conversion of the pulp into ashes or mixture with binders before the drying process. This not only increases the production costs of the new materials but on many occasions provides undesirable characteristics to the material, because it makes it corrosive, reactive, explosive, toxic and flammable. Likewise, in the processes where ashes are used the incineration generates greenhouse gases. In addition, in these processes the quantity of employed sludge is very low because in them it is considered necessary to include a high percentage of binders to achieve the desired resistance in building materials.

Likewise, there exists processes that don't employ binders, as is the process disclosed in patent US6379594 that uses fibrous material that contains cellulose that is not part of a tree and is selected from a group that includes plants raw fibres, pure cellulose, paper wastes, cardboard wastes. In this case, water is added to this raw material and is finely chopped in a continuous grinding machine with a total energy expense of at least 0.5 KWh/kg, based in the dry weight of the raw material. The microfiber pulp produced has an increase in surface of internal fibre and in the degree of cross-linking, this paste is then subjected to a moulding process to give it a specific form and then is dried to remove water and harden the moulded form in the specific work piece. Although this application has the advantage of producing materials without the addition of other biding agents as cement, it requires the incorporation of more water, which results unnecessary because along the process it would be essential to remove it. Also, it demands a high energy consumption to remove the excess water as well as for the grinding.

Meanwhile, the document DE19952459 reports a process to develop the moulded parts that comprise a mixture of paper. During this process the moulded materials are initially produced preparing a fibre suspension from paper waste. Afterwards the water is withdrawn and the paste is moulded by pressure, dried and impregnated with a binding agent, selected between gums or fire and moisture repellent adhesives, of biological or chemical base. Although this process eliminates the binders from the mixture with which the material is produced, it requires other binders and even so it must be strengthened with metallic rods to achieve the desired resistance.

The two processes previously described don't use the wastes that paper industries generate, with which they limit the cellulose recycling capacity.

Another existing method in the state of the technique is the one mentioned on application EP1158094 where the binders are eliminated but aluminium oxide (Al₂O₃), aluminium dioxide (SiO₂), calcium oxide (CaO), sodium oxide (Na₂O), magnesium oxide (MgO), phosphorous pentoxide (P₂O₅), sulphur oxide (SO3) potassium oxide (KO₂), titanium oxide (TiO₂) manganese oxide (MnO), iron (III) oxide (Fe₂O₃), zinc oxide (ZnO₃), clays (Al₂O₃-SiO₂), glass (Al₂O₃-SiO₂-CaO), calcium carbonate (CaCO₃), halogens, crystal bodies, binders, such as thermosetting resins and other oxides for the production of the material are required. In this case the process includes a stage of fibrous material orientation, which impacts in more time invested in the process. In this case the obtained material, presents a high bending resistance due principally to the polymeric superficial sheets that compose the material, but it doesn't makes any reference to the compression resistance, which is a relevant characteristic in the materials employed in building.

So, it is evident that in the state of the technique existed the need to establish a method that allows taking advantage of the *"sludge"* to avoid that it is thrown in landfills near the paper industries or their incineration affecting the environment. Specifically, a process that employs high percentages of *"sludge"* is required and therefore, that helps to solve the environmental problem generated by the huge quantity of wastes that the paper industry generates annually.

In this sense, its is required a method that allows to maximize the consumption of sludge for the production of building materials or other applications, optimizing the environmental service of cellulose; without it implying high energy consumptions, addition of great quantities of binders, the incorporation of non-environmental friendly compounds, nor high costs that would lead the process not to be profitable. In addition, it is essential that the obtained material comply with the conditions of resistance demanded by the international standards.

### FIGURES DESCRIPTION

- Figure 1.: Graph of the relation of binder cost, specifically resin, against its resistance to compression.
- Figure 2.: Graph of the relation of binder cost, specifically cement, against its resistance to compression.

### INVENTION DESCRIPTION

The present invention is about a process to which the "sludge" is subjected to be turned into building material, where the costs are very low, the addition of binders is null and the quantity of employed sludge is of 100% of the produced material.

The process comprises the stages of homogenization, pressing, drying and waterproofing. Bellow is described in detail each one of them:

The last process to which the "sludge" is subjected in the paper factory is a mechanical pressing, in this process the waste looses a great quantity of water and outputs with different grain sizes, because during this stage lumps are formed.

The first stage of the process that is claimed here is the homogenization, where the particle size of the "sludge" is levelled between 0.1mm and 20mm, with the purpose of increasing the fibres cohesion and decrease the effort concentrators that are generated in the solidification between linking points of the lumps, to continue with the next stage. This work can be executed manually or through a gyratory screen, lump crusher, a hammer mill or other similar equipment that allows to fraction the "sludge" until having an optimum size, able to cross a screen of the dimensions previously described.

During the next stage the material is pressed, preferably with a hydraulic force, at a pressure between the range of 0.98 MPa to 6.86 MPa on the piece, preferably 1.41 MPa to 6.86 MPa, and better still 4.90 MPa to 6.86 MPa applying the force in a continuous manner until the position that allows achieving the standard size, through this compression its eliminated part of the moisture and the cellulose fibres are compacted increasing the linking between them. From this pressure also depends the porosity of the material, which affects in a direct way the moisture absorption.

In the drying stage, the pressed product is taken to a drying chamber where the material finishes loosing moisture at environmental conditions or by forced convection of external air, controlling the temperature without exceeding 110°C, preferably between 42°C and 90°C and maintaining the relative moisture between 30 and 80% in the drying chamber, preferably between 30 and 60%. In case that the process is done in some place where the temperature is bellow 14°C, it would be required the use of ovens or heating equipment and dehumidify the chamber's air.

Finally, after the drying a waterproofing agent is applied to the material to reduce the water penetration in it, which it can be a sealing aqueous solution or primer or a composition of polyhydroxyls. This process is done on the outer surface of the product by dipping or spraying, following the dosage recommendation provided by the manufacturer.

### EXAMPLES

In search of showing the benefits of this process and of the obtained material through it, bellow are presented non-limiting examples on the best way of carrying out the invention.

### Example 1

The performed trials to evaluate the compression were done subjecting cylindrical specimens of the material to different compacting pressures. The trials were done following the procedures established by the standard NTC 673 corresponding to "COMPRESSION RESISTANCE TEST OF NORMAL CONCRETE CYLINDERS".

15 cylindrical specimens were submitted to different compacting pressures to determine the mechanical resistance to compression. The results are presented in table 1, shown bellow:

**Table 1**

| **No.** | **FORMING PRESSURE [MPa]** | **COMPRESSION RESISTANCE [MPa]** |
|---|---|---|
| 1 | 0,00 | 0,00 |
| 2 | 0,29 | 0,72 |
| 3 | 0,78 | 0,99 |
| 4 | 0,98 | 1,76 |
| 5 | 1,96 | 2,31 |
| 6 | 2,75 | 2,97 |
| 7 | 4,02 | 3,52 |
| 8 | 4,41 | 3,96 |
| 9 | 4,81 | 4,62 |
| 10 | 5,20 | 5,62 |
| 11 | 5,59 | 6,33 |
| 12 | 5,88 | 6,72 |
| 13 | 6,18 | 7,05 |
| 14 | 6,57 | 7,98 |
| 15 | 6,86 | 9,02 |

### Example 2

Comparing the results reported in table 1 with the minimum value established in table 2 of standard NTC 4205 in relation to "CIVIL ENGINEERING AND ARCHITECTURE. MASONRY UNITS OF CLAY, CERAMIC BRICKS AND BLOCKS", standard that establishes the requirements that ceramic bricks and blocks used as masonry units must comply and fix the parameters with which there are determined the different types of units, it evidences that the compression values of the new material are more than 4 times above the minimum established by the standard. As it can be observed in table 2, the minimum compression resistance for the horizontal perforation is of 2.0 MPa while the reported value for the invention's material is of 9.02 MPa, that is to say, more than 4 times the established in the standard.

**Table 2**

| **Type** | **Minimum resistance ¹⁾ to compression MPa (kgf/cm2)** | | **Maximum water absorption %** | | | |
|---|---|---|---|---|---|---|
| | | | **Inner** | | **Outer** | |
| | **Avg 5 U** | **Unit** | **Avg 5 U** | **Unit** | **Avg 5 U** | **Unit** |
| PH | 3,0 (30) | 2,0 (20) | 17 | 20 | 13,5 | 14. |
| PV | 14,0 (140) | 10,0 (100) | 17 | 20 | 13,5 | 14 |
| M | 14,0 (140) | 10,0 (100) | 17 | 20 | 13,5 | 14 |

| | | | | | | |
|---|---|---|---|---|---|---|
| 1) For the case of bricks of vertical perforation, the established values correspond to minimum Net Resistance to compression, in the other cases correspond to gross Resistance. PH= Unit of masonry of horizontal perforation (Brick and Block) PV= Unit of masonry of vertical perforation (Brick and Block) M= Unit of solid masonry (brick) | | | | | | |

### Example 3

Likewise, the water absorption of the invention's material was evaluated according to the procedure established in the Standard NTC 4017 related with "METHODS FOR THE SAMPLING AND TEST OF MASONRY UNITS AND OTHER CLAY PRODUCTS". The obtained results are shown in table 3, annexed bellow.

**Table 3**

| **APPLICATION** | **MAXIMUM WATER ABSOPTION [%]** |
|---|---|
| Elements without treatment | 45 |
| Inner elements | 17 |
| Outer elements | 14 |
| Waterproof elements (which would be plastered) | 5 |
| Waterproof elements (that won't be plastered) | 0 |

As it can be observed, the maximum value of water absorption is found within the standardized limits in table 2 from standard NTC 4205 on "CIVIL ENGINEERING AND ARCHITECTURE. MASONRY UNITS OF CLAY, CERAMIC BRICKS AND BLOCKS". Such values fluctuate from 45% to total waterproofing.

### Example 4

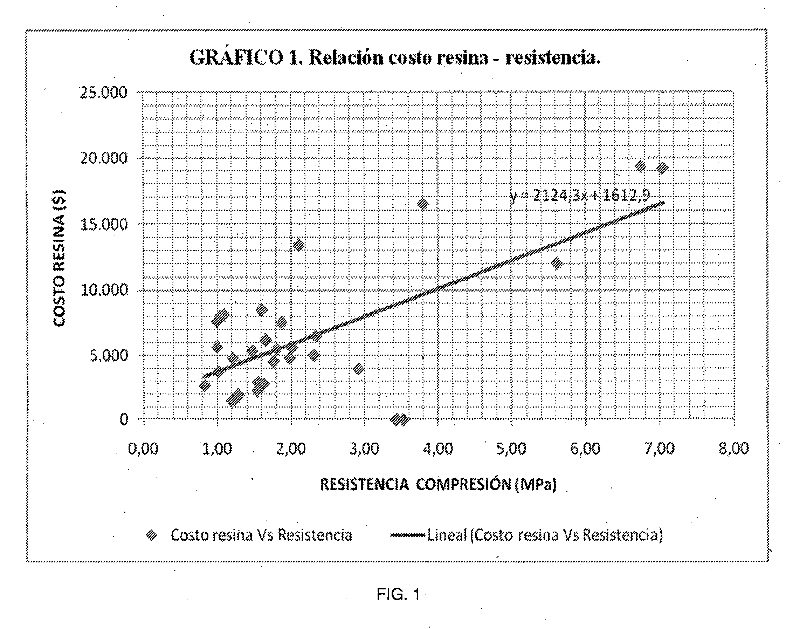

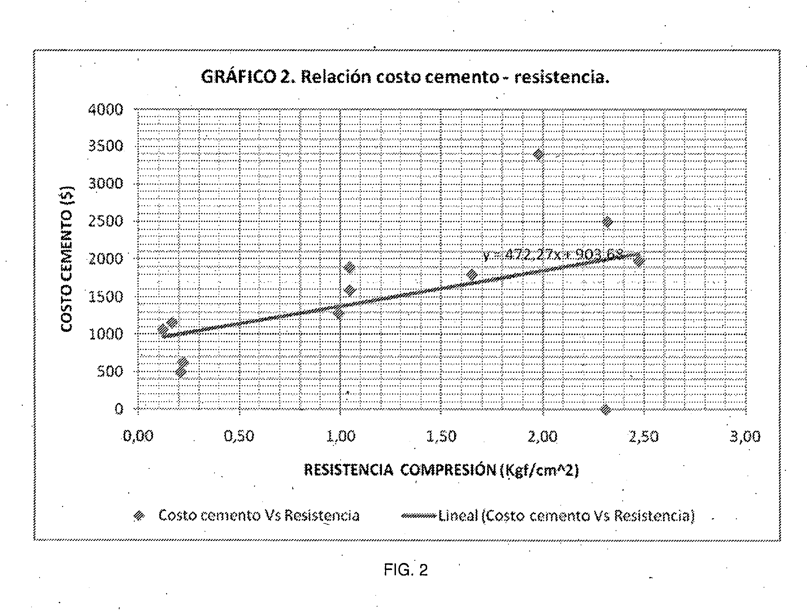

A test to determine the material's resistance in function of the quantity and therefore, the value of the binder was performed. The previous analysis was done with resins and cement. As is observed in graphs 1 and 2, even though no binders are added it is possible to obtain a good resistance to compression. As it can be confirmed in figure 1, when the materials are done through the process of the invention and no resins are added it is obtained a resistance to compression between 3 MPa and 4MPa, which is superior to the achieved resistance with materials that include these binders. On its part, figure 2, that comprises the comparative tests between the non presence of binders and the addition of cement, shows that compression resistances are obtained in a range of 2 MPa and 3 MPa with the material produced according to the procedure of the present invention, that is to say, without the addition of cement or other binder.

From the above its evident that the material of the invention constitutes a very good alternative to make the treatment of paper sludge's economically feasible, every time that the processes that are based in mixtures with binders increase the cost of production of the materials which make non-viable their industrial application.

### Example 5

To give more clarity to the benefits achieved with the material produced through the process of the invention, bellow there are presented in table 4 the characteristics of a conventional block (brick) and are compared with the characteristics of the block of the material developed with the process of the invention, which are summarized in table 5:

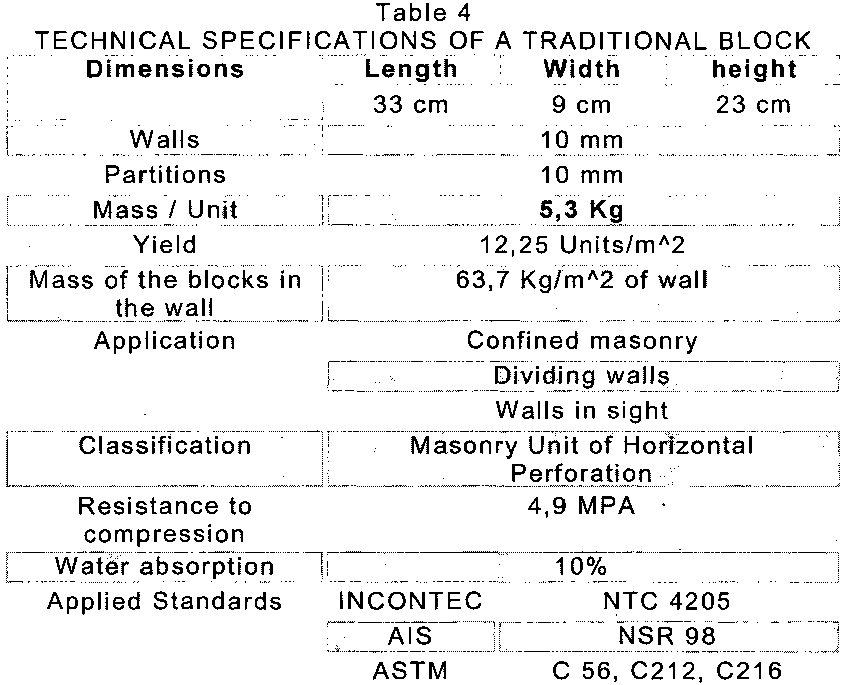

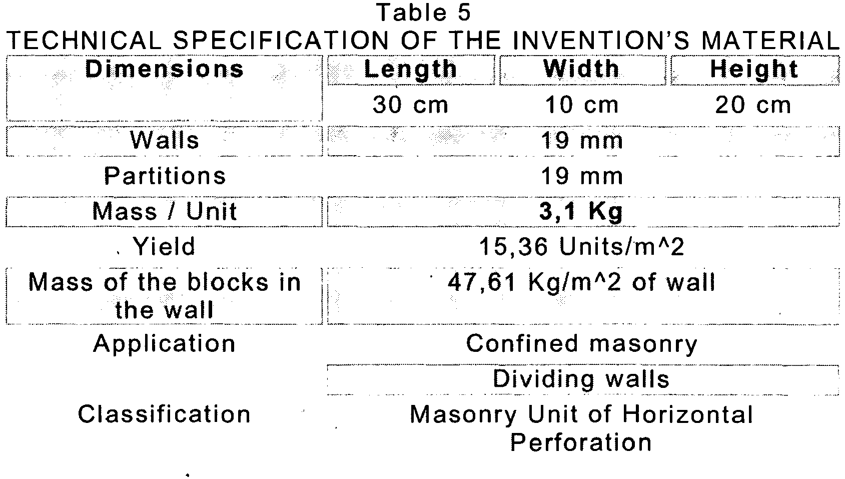

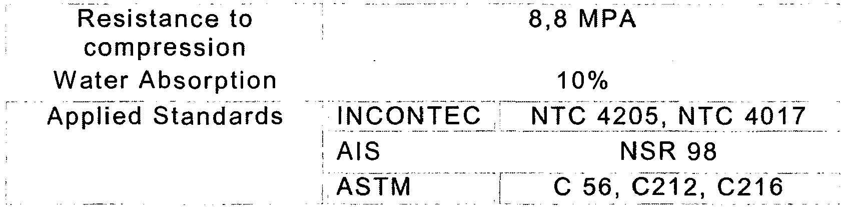

When comparing the data of the mass in tables 4 and 5 it can be observed how the value of the new material (3.1 kg) decreases in comparison with the reported one for the conventional block (5.3 kg), this is around 41%, which apart from reducing the dead loads and transport costs, provides more security in case of earthquakes. Also is worth highlighting the superiority of the invention's material regarding resistance to compression, since it is in 8.8 MPa, while the resistance of the traditional material is 4.9 MPa. This allows affirming that with the process of the invention the resistance of the obtained materials from the paper sludge is increased in a 44%.

## Claims

1. Process to manufacture building materials from *"paper sludge,* characterized because it comprises the stages of:
a. homogenization,
b. pressing at a pressure between 0.98 MPa and 6.86 MPa,
c. Drying at a temperature bellow 110°C with moisture control between 30 and 80%, and
d. waterproofing.

2. Process according to claim 1 characterized because the homogenization stage of the "paper sludge" comprises reducing it to particles with a size between 0.1 mm and 20 mm.

3. Process according to claim 1 characterized because the pressure exerted on the material during pressing stage b) is preferably between 1.41 MPa y 6.86 MPa.

4. Process according to claim 3 characterized because the pressured exerted on the material during pressing stage b) is preferably between 1.41 MPa y 6.86 MPa.

5. Process according to claim 1 characterized because the drying temperature is preferably from 42°C to 90°C and the relative humidity is between 30 and 60%.

6. Process according to claim 1 characterized because the temperature of the place where the process is done is bellow 14°C, the drying stage will be done in ovens or equipments for heating and dehumidify the air in the chamber.

7. Process according to claim 1 characterized because the waterproofing of the material is done by dipping or spraying.

8. Process according to claim 1 characterized because for the waterproofing its used a waterproofing agent, it can be an aqueous emulsion sealant or primer or a composition of polyhydroxyls or any compound to reduce the water penetration into the material.

9. Material produced through the process according to claims 1 to 8.
